# EUROPÄISCHE PATENTSCHRIFT

(11) **EP 1 616 431 B1**
(45) Veröffentlichungstag und Bekanntmachung des Hinweises auf die Patenterteilung: **28.03.2018**
(21) Anmeldenummer: 04726442.9
(22) Anmeldetag: 08.04.2004
(51) Int. Cl.: H04M 3/42, H04M 3/493, H04M 3/487

(54) **VERFAHREN ZUM ANPASSEN EINES LANDESSPEZIFISCHEN MOBILFUNKPORTALS**
METHOD FOR CUSTOMISING A COUNTRY-SPECIFIC MOBILE RADIO PORTAL
PROCEDE D'ADAPTATION D'UN PORTAIL DE TELEPHONIE MOBILE SPECIFIQUE D'UN PAYS

(30) Priorität: 15.04.2003 DE 10317562
(43) Veröffentlichungstag der Anmeldung: 18.01.2006
(73) Patentinhaber: Vodafone Holding GmbH, 40213 Düsseldorf (DE)
(72) Erfinder: GAIDA, Klemens, 40213 Düsseldorf (DE); STEIN, Silke, 64683 Einhausen (DE)
(74) Vertreter: Ring & Weisbrodt
(86) Internationale Anmeldenummer: PCT/EP2004/003795
(87) Internationale Veröffentlichungsnummer: WO 2004/093418

(56) Entgegenhaltungen:
- WO-A-01/43361
- WO-A-01/86973
- WO-A-02/49335
- US-A- 6 028 838
- N. HOUSSOS, M. KOUTSOPOULOU AND S. SCHALLER: "A VHE architecture for advanced value-added services provision in 3rd generation mobile communication networks" GLOBECOM 2000, [Online] Dezember 2000 (2000-12), XP002292953 SAN FRANCISCO, USA Gefunden im Internet: URL:http://mobivas.cnl.di.uoa.gr/public/pu blications/globecom2000.pdf> [gefunden am 2004-08-05]

## Beschreibung

### Technisches Gebiet

Die Erfindung betrifft Verfahren für das Betreiben eines Mobilfunknetzes, bei dem ein Mobilfunkendgerätenutzer mit einem Mobilfunkendgerät auf ein landesspezifisches, menügesteuertes Mobilfunkportal Zugriff hat, welches eine Menüführung auf einer Anzeige des Mobilfunkendgerätes mit landesspezifischen Sprach- und Serviceleistungen aufweist *und eine Auswahl verschiedener landesspezifischer Mobilfunkportale vorgesehen ist.*

### Stand der Technik

Mobilfunkendgeräte, insbesondere "Handys", sind mittlerweile vielseitige Kommunikationsmittel geworden. Sie werden nicht nur zum üblichen Telefonieren eingesetzt, sondern insbesondere auch um bestimmte Dienstleistungen, wie z.B. Verkehrsinformationen, Hotel- oder Veranstaltungsführer, anzubieten. Diese Dienstleistungen werden in einem so genannten "Portal" zusammengefasst, auf das ein Benutzer über ein Menü zugreifen kann. Das Menü wird auf einer Anzeige des Mobilfunkendgeräts angezeigt und ist über ein Bedienerfeld steuerbar. Die Menüs sind üblicherweise hierarchisch aufgebaut.

Jeder Anbieter eines Landes bietet sein Portal zunächst in seiner Heimatsprache an. Ein Benutzer eines Mobilfunkendgeräts, dessen Heimatnetz in Deutschland liegt, reist z.B. nach Spanien in den Urlaub. Durch "Roaming" kann das Mobilfunkendgerät, insbesondere länderübergreifend, in fremden Mobilfunknetzen verwendet werden. Um dem Benutzer möglichst hohen Komfort zu gewährleisten, wird ihm in seiner Heimatsprache jeweils ein Portal voreingestellt angeboten. So kann er sich in einem fremden Land schnell über das Portal, beispielsweise ein Hotel in seiner Heimatsprache zum Nächtigen, auswählen. Für Reisende und Urlauber sind diese heimatsprachlichen Portale sehr komfortabel.
Jedoch für Benutzer, die die jeweilige Landessprache beherrschen und sich ggf. länger in dem Land aufhalten, ist dieser Komfort möglicherweise nicht von Nutzen. Zum einen werden durch das Roaming relativ hohe Gebühren fällig und zum anderen werden nicht unbedingt landesspezifische Dienstleistungen angeboten. Das Mobilfunkportal entspricht somit nicht immer den Bedürfnissen der Nutzer. Die WO 01/43361 A1 offenbart ein Netzwerkportal mit einer sogenannten Roaming-Funktion, wobei die Inhalte des Portals an das jeweilige lokale Netzwerk, in dem sich ein Nutzer momentan befindet, angepasst werden.

*In dem Dokument von* N. Houssos, M. Koutsopoulou and S. Schaller; "A VHE architecture for advanced value-added services provision in 3rd generation mobile communications networks"; Globecom 2000, Dezember 2000, San Francisco, USA *wird eine Architektur für eine verteilte Applikationsplattform beschrieben, mit der Benutzern eines Mobilfunknetzes der dritten Generation Mehrwertdienste angeboten werden. Dazu ist in dem Mobilfunknetz eine Managementeinrichtung (VASM) für Mehrwertdienste vorgesehen, mit der ein Benutzer über ein Portal nach verfügbaren Diensten suchen kann und eine Auswahl an Diensten angeboten bekommt. Ein Zugriff auf angebotene Dienste erfolgt über ein Portal mit einem WAP- oder HTTP*/*1.1-Client des Mobilfunkendgeräts. Eine personalisierte Nutzung von Mehrwertdiensten wird durch ein Benutzerprofil erreicht, in dem u.a. Informationen zu benutzerspezifischen Einstellungen, wie beispielsweise Menü- und Spracheinstellungen für einem Mehrwertdienst gespeichert sind.*
*Beim Roaming in einem besuchten Mobilfunknetz wird dem Benutzer ein personalisierter Zugriff auf Mehrwertdienste sowohl im Heimatmobilfunknetz als auch im besuchten Mobilfunknetz angeboten. Falls das besuchte Mobilfunknetz über keine entsprechende Managementeinrichtung verfügt, muss der Benutzer dafür über eine kostenintensive Verbindung auf die Managementeinrichtung des Heimatmobilfunknetzes zugreifen. Wenn das besuchte Mobilfunknetz ebenfalls eine Managementeinrichtung enthält, wird dem Benutzer eine Auswahl zwischen den Managementeinrichtungen angeboten, welche er selbsttätig ausführen muss.*
*Die* WO 01/86973 A2 *offenbart einen Dienst zum Anzeigen der Identität eines WAP-Servers auf einem WAP-fähigen Mobilfunkendgerät beim Verbindungsaufbau zwischen dem Mobilfunkendgerät und dem WAP-Server. Wenn ein Benutzer einen WAP-Server bzw. ein WAP-Portal nutzen möchte, wird üblicherweise der voreingestellte WAP-Server des Heimatmobilfunknetzes angewählt. Dies führt bei einem Roaming in besuchten Mobilfunknetzen nachteilhaft zu einer teuren Verbindung zum Heimatmobilfunknetz. In einem besuchten Mobilfunknetz wird ein Benutzer durch die bei einem Verbindungsaufbau angezeigte Identität des angewählten WAP-Servers unmittelbar auf diesen Umstand hingewiesen. Der Benutzer kann daraufhin den Verbindungsaufbau zum WAP-Server des Heimatmobilfunknetzes unterbrechen und manuell einen WAP-Server des besuchten Mobilfunknetzes anwählen. Dazu verfügt das Mobilfunkendgerät über eine Liste von verschiedenen WAP-Servern. Diese Vorgehensweise ist für den Benutzer sehr umständlich und zeitintensiv.*

### Offenbarung der Erfindung

Aufgabe der Erfindung ist es daher, die Nachteile des Standes der Technik zu beseitigen und insbesondere für den Anwender den Bedienungskomfort zu erhöhen, indem das Mobilfunkendgerät individuell auf seine Bedürfnisse *eingestellt wird.* In Übereinstimmung mit der Erfindung wird diese Aufgabenstellung durch ein Verfahren gemäß Anspruch 1 gelöst.

Erfindungsgemäß wird die Aufgabe dadurch gelöst, daß bei einem Verfahren der eingangs genannten Art für das Betreiben eines Mobilfunknetzes, bei dem ein Mobilfunkendgerätenutzer mit einem Mobilfunkendgerät auf ein landesspezifisches, menügesteuertes Mobilfunkportal Zugriff hat, welches eine Menüführung auf einer Anzeige des Mobilfunkendgerätes mit landesspezifischen Sprach- und Serviceleistungen aufweist *und* eine Auswahl verschiedener landesspezifischer Mobilfunkportale vorgesehen ist,
*a) das landesspezifische, menügesteuerte Mobilfunkportal des Landes, in dem sich das Mobilfunkendgerät befindet, voreingestellt ist und ein entsprechendes Auswahlmenü der verschiedenen Mobilfunkportale auf der Anzeige dargestellt wird,*
*b) das landesspezifische, menügesteuerte Mobilfunkportal beim Grenzübertritt von Landesgrenzen eingestellt wird,*
*c) die Sprache für das Mobilfunkportal auswählbar ist und*

Die Erfindung beruht auf dem Prinzip, dem Mobilfunkendgerätenutzer nicht nur ein Portal anzubieten, sondern beliebig viele Portale, wovon er sich eines aussuchen kann, welches seinen Bedürfnissen entspricht.

*Das landesspezifische, menügesteuerte Mobilfunkportal des Landes, in dem sich das Mobilfunkendgerät befindet, wird nunmehr voreingestellt.* Auch weiterhin kann der Mobilfunkendgerätenutzer wie bisher ein voreingestelltes Mobilfunkportal nutzen. Er hat jedoch die Option, dann in das Mobilfunkportal seiner Wünsche zu wechseln.
Eine vorteilhafte Ausbildung des Verfahrens ergibt sich ferner dadurch, dass das landesspezifische, menügesteuerte Mobilfunkportal beim Grenzübertritt von Landesgrenzen eingestellt wird.
Eine weitere Ausgestaltung des erfindungsgemäßen Verfahrens erhält man, indem die Sprache für das Mobilfunkportal auswählbar gestaltet wird.
Weitere Vorteile ergeben sich aus dem Gegenstand der Unteransprüche.

### Kurze Beschreibung der Zeichnung

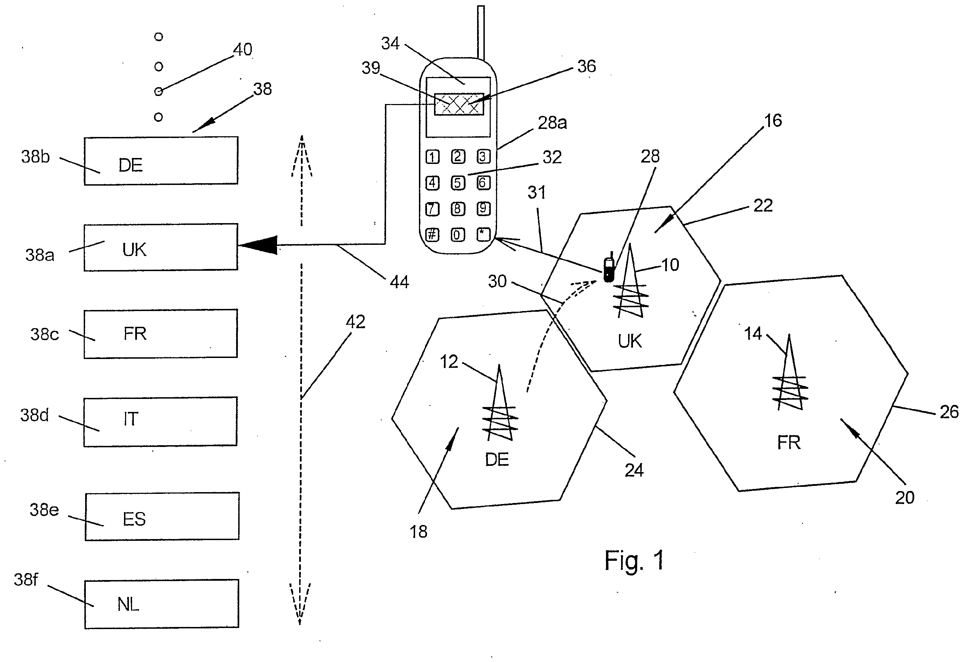

- Fig. 1: zeigt in einer Prinzipskizze das erfindungsgemäße Verfahren.

### Bevorzugtes Ausführungsbeispiel

In Fig. 1 wird in einer Prinzipskizze schematisch das erfindungsgemäße Verfahren dargestellt. Mit 10, 12, 14 werden Masten von Mobilfunknetzen 16, 18, 20 bezeichnet. Sie symbolisieren die Mobilfunknetze 16, 18, 20 verschiedener Länder. Als Beispiel für die Mobilfunknetze seien hier die Länder Großbritannien 16, Deutschland 18 und Frankreich 20 aufgeführt. Die Grenzen der nationalen Mobilfunknetze 16, 18, 20 werden jeweils durch Sechsecke 22, 24, 26 symbolisiert.

Ein Mobilfunkendgerät 28 hat das Mobilfunknetz 18 des einen Landes in das Mobilfunknetz 16 des anderen Landes gewechselt. Der Wechsel wird durch die gestrichelte Linie 30 angedeutet. Das Mobilfunkendgerät 28 wird nochmals vergrößert als 28a herausgestellt, Pfeil 31. Neben einem Bedienerfeld 32 weist das Mobilfunkendgerät 28a auch eine Anzeige 34 auf. Das Mobilfunkendgerät 28a wird über das Bedienerfeld 32 und ein Menü 36, welches auf der Anzeige 34 dargestellt wird, gesteuert. Das Menü 36 ist Bestandteil eines Portals 38a von mehreren länderspezifischen Portalen 38, welches ganz oder teilweise von dem jeweiligen Mobilfunknetzbetreiber angeboten wird. Unter diesen Portalen 38 werden Dienstleistungen, wie insbesondere Verkehrsinformationen sowie Hotel- und Veranstaltungsführer, angeboten. Um das Menü 36 möglichst auf seine individuellen Bedürfnisse speziell anzupassen, kann zwischen verschiedenen Portalen 38a bis 38f gewählt werden. Die Portale 38 werden jeweils zentral von den Mobilfunknetzanbietern in nicht dargestellten Steuer- und Verwaltungseinheiten verwaltet.

Die Portale 38 werden vergrößert dargestellt. Punkte 40 deuten an, dass die Anzahl der zugänglichen Portale grundsätzlich beliebig ist. Dabei können innerhalb eines Landes mehrere Portale 38a bis 38f, insbesondere auch von unterschiedlichen Mobilfunknetzanbietern, vorgesehen sein. Der Nutzer hat nun die Möglichkeit, sich landesspezifische Portale 38a bis 38f individuell auszuwählen und diese ggf. auf seine Bedürfnisse anzupassen. Die Auswahlmöglichkeit eines Portals 38 wird mit Pfeil 42 symbolisiert. Pfeil 44 ist der Zeiger, der auf die Auswahl zeigt.

Anhand der Zeichnung soll nun das Ausführungsbeispiel des Verfahrens erläutert werden. Das Heimatnetz des Mobilfunkendgeräts 28 liegt in Deutschland 18. Dem Mobilfunkteilnehmer, der mit dem Mobilfunkendgerät 28 von Deutschland 18 nach Großbritannien 16 reist, wird ein deutsches Portal 38b angeboten bekommen, weil es sich eben um ein deutsches Teilnehmergerät 28 handelt. Dies wird derzeit durch das Roaming nach dem GSM-Standard ermöglicht. Für Reisende, die sich nur kurz in dem entsprechenden Land aufhalten mag dies sinnvoll sein, ein Menü bzw. Portal 38 in ihrer Sprache vorzufinden. Er kann nämlich mit den angebotenen Dienstleistungen leicht, z.B. ein Hotel, ein Restaurant, Kulturprogramme oder sonstige Dienstleistungen, abrufen.

Oft will ein Mobilfunknutzer jedoch nicht die auf Touristen und Reisende abgestimmten Angebote nutzen. Er will unter Umständen gerade die speziellen Eigenarten eines Landes 16, 18, 20 vorfinden. Diese Dienstleistungen kann er aber nur über die Portale 38, die für die jeweils heimischen Mobilfunkendgeräte 28 vorgesehen sind, erreichen. Um dieses Ziel erreichen zu können, besteht nunmehr die Möglichkeit, zwischen verschiedenen Portalen 38a bis 38f auszuwählen, um das Menü an die individuellen Bedürfnisse anzupassen. Dafür wird ein entsprechendes Auswahlmenü 39 auf der Anzeige 34 dargestellt. So kann er sich beispielsweise das Portal des Landes auswählen, in dem er sich gerade befindet.

## Patentansprüche

1. Verfahren für das Betreiben eines Mobilfunknetzes (16, 18, 20), bei dem ein Mobilfunkendgerätenutzer mit einem Mobilfunkendgerät auf ein landesspezifisches, menügesteuertes Mobilfunkportal (38) Zugriff hat, welches eine Menüführung auf einer Anzeige (34) des Mobilfunkendgerätes (28) mit landesspezifischen Sprach- und Serviceleistungen aufweist, wobei das landesspezifische, menügesteuerte Mobilfunkportal (38b) des Heimatnetzes des Mobilfunkendgerätenutzers voreingestellt wird, und eine Auswahl verschiedener landesspezifischer Mobilfunkportale (38a-38f) vorgesehen ist, wobei
a) alternativ das landesspezifische, menügesteuerte Mobilfunkportal (38a) des Landes (16), in dem sich das Mobilfunkendgerät (28) befindet, voreingestellt wird, wobei das landesspezifische, menügesteuerte Mobilfunkportal (38) beim Grenzübertritt von Landesgrenzen (22, 24, 26) eingestellt wird,
b) ein Auswahlmenü (39) der zugänglichen, verschiedenen landesspezifischen Mobilfunkportale (38a-38f) auf der Anzeige (34) dargestellt wird, wobei innerhalb eines Landes mehrere Mobilfunkportale (38a-38f) auch von unterschiedlichen Mobilfunknetzanbietern vorgesehen sein können, und
c) die Sprache für das Mobilfunkportal (38) auswählbar ist.

2. Verfahren für das Betreiben eines Mobilfunknetzes nach Anspruch 1, **dadurch gekennzeichnet, dass** das Mobilfunkportal (38) individuell an den Mobilfunkendgerätenutzer durch die Auswahlhäufigkeit bestimmter Menüpunkte des Mobilfunkportals angepasst wird.

## Claims

1. A method for operating a mobile radio network (16, 18, 20), in which a mobile terminal user having a mobile terminal has got access to a country-specific, menu-controlled mobile radio portal (38) which comprises a menu navigation on a display (34) of the mobile terminal (28) with country-specific language and service features, wherein the country-specific, menu-controlled mobile radio portal (38b) of the home network of the mobile terminal user will be pre-set and a selection of different country-specific mobile radio portals (38a-38f) is provided, wherein alternatively
a) the country-specific, menu-controlled mobile radio portal (38a) of the country (16) in which the mobile terminal (28) is located will be pre-set, wherein the country-specific, menu-controlled mobile radio portal (38) will be set upon border crossing of country borders (22, 24, 26),
b) a selection menu (39) of the accessible different country-specific mobile radio portals (38a-38f) will be represented on the display (34), wherein inside a country several mobile radio portals (38a-38f) can also be provided by different mobile radio network providers, and
c) the language of the mobile radio portal (38) is selectable.

2. A method for operating a mobile radio network according to claim 1, **characterized in that** the mobile radio portal (38) will be individually adapted to the mobile terminal user by means of the selection frequency of certain menu options of the mobile radio portal.

## Revendications

1. Procédé de fonctionnement d'un réseau radio mobile (16, 18, 20), dans lequel un utilisateur de terminal mobile, qui comprend un terminal mobile, a accès à un portail de téléphonie mobile (38) spécifique d'un pays et commandé par menu, lequel portail comprend une navigation de menu sur un affichage (34) du terminal mobile (28) comprenant des services linguistiques et des activités de services spécifiques d'un pays, le portail de téléphonie mobile (38b) spécifique d'un pays et commandé par menu du réseau domestique de l'utilisateur de terminal mobile étant prédéfini, et une sélection de portails de téléphonie mobile différents et spécifiques d'un pays (38a-38f) étant prévue, dans lequel alternativement
a) le portail de téléphonie mobile spécifique d'un pays et commandé par menu (38a) du pays (16) où se trouve le terminal mobile (28) est prédéfini, le portail de téléphonie mobile spécifique d'un pays et commandé par menu (38) étant défini lors du franchissement des frontières étatiques (22, 24, 26),
b) un menu de sélection (39) des portails de téléphonie mobile (38a-38f) différents, accessibles et spécifiques d'un pays sont représentés sur l'affichage (34), plusieurs portails de téléphonie mobile (38a-38f) à l'intérieur d'un pays pouvant être prévus par des opérateurs de réseau radio mobile différents, et
c) la langue pour le portail de téléphonie mobile (38) est sélectionnable.

2. Procédé de fonctionnement d'un réseau radio mobile selon la revendication 1, **caractérisé en ce que** le portail de téléphonie mobile (38) est adapté individuellement à l'utilisateur de terminal mobile à l'aide de la fréquence de sélection de certains éléments de menu du portail de téléphonie mobile.
